# EUROPÄISCHE PATENTSCHRIFT

(11) **EP 4 384 652 B1**
(45) Veröffentlichungstag und Bekanntmachung des Hinweises auf die Patenterteilung: **30.07.2025**
(21) Anmeldenummer: 22768607.8
(22) Anmeldetag: 11.08.2022
(51) Int. Cl.: C25B 1/04, C25B 9/05, C25B 9/70

(54) **ABDICHTUNGSVORRICHTUNG ALS ZELLPERIPHERIE FÜR EINEN ELEKTROLYSEZELLEN-STACK**
SEALING DEVICE AS A CELL PERIPHERY FOR AN ELECTROLYTIC-CELL STACK
DISPOSITIF D'ÉTANCHÉITÉ UTILISÉ EN TANT QUE PÉRIPHÉRIE DE CELLULE POUR UN EMPILEMENT DE CELLULES D'ÉLECTROLYSE

(30) Priorität: 13.08.2021 AT 506612021
(43) Veröffentlichungstag der Anmeldung: 19.06.2024
(73) Patentinhaber: H2i GreenHydrogen GmbH, 4702 Wallern an der Trattnach (AT)
(72) Erfinder: NEUBACHER, Dietmar, 8044 Graz (AT)
(74) Vertreter: Burger, Hannes
(86) Internationale Anmeldenummer: PCT/AT2022/060280
(87) Internationale Veröffentlichungsnummer: WO 2023/015330

(56) Entgegenhaltungen:
- WO-A1-2016/034185
- WO-A1-2020/039218
- DE-B4- 10 058 381
- DE-U1- 20 008 539
- US-A1- 2009 301 868

## Beschreibung

Die Erfindung betrifft eine Elektrolysevorrichtung zur Erzeugung von gasförmigem Wasserstoff, wie sie in den Ansprüchen angegeben ist. Besonders zeichnet sich die offenbarte Elektrolysevorrichtung durch eine Abdichtungsvorrichtung aus, welche ein besonders hohes und langfristig zuverlässiges Maß an Dichtheit der Elektrolysevorrichtung gewährleistet.

In der EP1601041B1 wird ein Brennstoffzellenstapel mit einem Federmodul gezeigt, welches Federmodul zwei gegenseitig verschiebbare Bauteile und eine Vielzahl von Federn, die zwischen dem ersten und dem zweiten Bauteil angeordnet sind, umfasst. Weiters weist der Brennstoffzellenstapel eine Einstellschraube und eine Endplatte auf, wobei das Federmodul zwischen der Endplatte und einem Stapel von Brennstoffzellen angeordnet ist und die Einstellschraube zwischen dem Federmodul und der Endplatte angeordnet ist. Hinsichtlich der Sicherheit und Nutzbarkeit, vor allem in Bezug auf die Abdichtung der Zellenstapel, stellt diese bekannte Ausgestaltung nur eine bedingt zufriedenstellende technische Lösung dar.

Weiters wird in der DE10058381B4 ein adaptives Druckverteilungssystem für einen modularen multifunktionalen Brennstoffzellenstapel vorgestellt, welches Edelstahlbolzen, einen faserverstärkten Kunststoffträger, angepasste Dichtungen und weitere Elemente umfasst. Weiters sind bei dieser Vorrichtung an mindestens einem Ende Spiraltellerfedern mit integrierten Unterlegscheiben zur Verspannung des Brennstoffzellenstapels für den gleichmäßigen Druckaufbau und die Druckhaltung vorgesehen. Wiederum ist diese offenbarte technische Lösung zum Aufbau eines Vorspanndruckes zur Abdichtung nur bedingt zufriedenstellend.

Aufgabe der vorliegenden Erfindung war es, die Nachteile des Standes der Technik zu überwinden und eine Vorrichtung und ein Verfahren zur Verfügung zu stellen, mittels derer unter anderem die Betriebssicherheit und Effektivität einer Elektrolysevorrichtung erhöht wird.

Diese Aufgabe wird durch eine Vorrichtung und ein Verfahren gemäß den Ansprüchen gelöst.

Die erfindungsgemäße Elektrolysevorrichtung zur Erzeugung von gasförmigem Wasserstoff, umfasst zumindest eine entlang einer Zellachse verlaufende Elektrolysezelle, welche aus entlang der Zellachse gestapelten bzw. aneinandergereihten plattenförmigen Elementen aufgebaut ist. Weiters umfasst die Elektrolysevorrichtung zumindest zwei durch Durchbrüche in den plattenförmigen Elementen, welche Durchbrüche jeweils Strömungskanäle ausbilden, deren Hauptrichtungen entlang der Zellachse verlaufen. Unter Hauptrichtung ist in diesem Sinne zu verstehen, dass die hauptsächliche Ausrichtung einer, in einer längsseitigen Projektion eines Strömungskanals gemittelten Geraden, eine Hauptrichtung eines Strömungskanals zeigt, welche Hauptrichtung entlang der Zellachse verläuft, wobei dies nicht zwingend parallel zur Zellachse sein muss. Insbesondere verläuft die Hauptrichtung eines Strömungskanals entlang der Hauptrichtung der Zellachse.

Weiters umfasst die Elektrolysevorrichtung wenigstens ein Abdichtungsmittel bzw. eine Abdichtungsvorrichtung zur Gewährleistung der Dichtheit der Elektrolysevorrichtung. Dieses Abdichtungsmittel umfasst ein erstes Widerlagerelement und ein zweites Widerlagerelement, welche Widerlagerelemente in Richtung der Zellachse zueinander beabstandet sind. Weiters umfasst das Abdichtungsmittel eine erste Druckplatte und eine zweite Druckplatte, welche in Richtung der Zellachse zueinander beabstandet sind und zwischen dem ersten Widerlagerelement und dem zweiten Widerlagerelement angeordnet sind, wobei die zumindest eine Elektrolysezelle zwischen der ersten Druckplatte und der zweiten Druckplatte angeordnet ist. Das Abdichtungsmittel umfasst weiters zumindest ein Halteelement um das erste Widerlagerelement und das zweite Widerlagerelement entlang der Zellachse in einem vorbestimmten Abstand zu halten. Weiters ist zumindest ein elastisch verformbares bzw. federelastisches Andrückelement zumindest zwischen einem einander nächstliegenden Paar aus einem Widerlagerelement und einer Druckplatte ausgebildet.

Bei dieser Elektrolysevorrichtung ist vorgesehen, dass jedem der Strömungskanäle jeweils zumindest ein elastisch verformbares Andrückelement zugeordnet ist, und dass ein entlang der Zellachse projizierter Andrückelement-Querschnitt von wenigstens einem dieser Andrückelemente gegenüber einem entlang der Zellachse projizierten Strömungskanal-Querschnitt zumindest teilweise überdeckend positioniert ist.

Vorteilhaft ist dabei, dass durch das zumindest eine elastisch verformbare Andrückelement ein gerichteter Kraftkegel entsteht, sodass der Kraftfluss in Richtung der Hauptausrichtung eines Strömungskanals gelenkt wird. Daraus resultiert vor allem im Bereich des Strömungskanals eine verbesserte Abdichtung gegenüber dem Umgebungs- bzw. Außenbereich der Elektrolysevorrichtung und gegenüber einem Innenbereich der Elektrolysezelle. Besonders die verbesserte Abdichtung der Strömungskanäle gegenüber dem Innenbereich ist hier hervorzuheben, da dies eine erhöhte Sicherheit bzw. ein besonders geringes Gefahrenpotential der Elektrolysevorrichtung mit sich bringt. Gleichzeitig ist durch eine verbesserte Abdichtung der Elektrolysevorrichtung gegenüber dem Außenbereich eine erhöhte Effektivität der Elektrolysevorrichtung erreicht, da Wasserstoff als kleinstes Element im Periodensystem in Bezug auf dessen Abmessung im molekularen Zustand eine hohe Neigung zur Diffusion hat.

Ein weiterer besonders hervorzuhebender positiver Effekt ist, dass durch das Zusammenwirken aus Widerlagerelement, Druckplatte und dem zumindest einem elastisch verformbaren Andrückelement eine verbesserte Abdichtung der Elektrolysevorrichtung besonders im Druckbetrieb gewährleistet ist. Verstärkt positiv bemerkbar ist dies vor allem bei einem schwellenden Druckbetrieb in Kombination mit prozessbedingten Temperaturänderungen, welche kombinierten Betriebszustände durchaus im Betrieb einer Elektrolysevorrichtung abgebildet werden. Durch das beschriebene Zusammenwirken, insbesondere durch die Verwendung der offenbarten Abdichtungsvorrichtung bzw. der hierfür eingesetzten Abdichtungsmittel, wird ein Gleiten von Dichtebenen, welche den plattenförmigen Elementen zugehörig sein können, in definierter Weise beherrschbar. Somit ist in weiterer Folge eine erhöhte Betriebssicherheit bei einem gleichzeitig erweiterten Betriebsspektrum und eine verlängerte Lebensdauer bzw. eine längerfristig unterbrechungsfreie Einsatzdauer der Elektrolysevorrichtung erzielbar.

Vorteilhaft ist weiters eine Ausprägung, gemäß derer vorgesehen sein kann, dass jedem der Strömungskanäle jeweils ein Andrückelement zugeordnet ist und dass eine Mittelachse von jedem der Andrückelemente zur Hauptrichtung der jeweiligen Strömungskanäle fluchtend ausgerichtet ist. Besonders vorteilhaft ist diese Ausprägung, wenn durch prozess- und/oder betriebsbedingte, schwellende Temperatur- und/oder Druckschwankungen innerhalb der Elektrolysezelle Wärmeausdehnungen der plattenförmigen Elemente resultieren und dadurch ein Gleiten der plattenförmigen Elemente zueinander auftritt. Durch die mit den Strömungskanälen fluchtend ausgerichtete Druck- bzw. Krafteinleitung und die damit verbundene Ausbildung eines Kraftkegels entlang der Hauptausrichtungen der Strömungskanäle wird ein relativer Gleitversatz von einzelnen plattenförmigen Elementen bezogen auf den jeweiligen Strömungskanal verhindert. Somit wird verhindert, dass Veränderungen des Strömungsquerschnitts der Strömungskanäle auftreten und gleichermaßen wird dadurch die Abdichtung der Strömungskanäle verbessert und die Sicherheit der Elektrolysevorrichtung erhöht.

Darüber hinaus kann vorgesehen sein, dass die Strömungskanäle durch ellipsenförmige Durchbrüche in den plattenförmigen Elementen gebildet sind und dass jedem Strömungskanal jeweils zwei Andrückelemente zugeordnet sind. Dabei entsteht der gegenseitig wirkende positive Effekt, dass einerseits bei entsprechender Ausrichtung die ellipsenförmigen Strömungskanäle eine verringerte Innenfläche des Strömungskanals im Nahbereich der Außen- und Innenfläche der Elektrolysezelle aufweisen, wobei gleichzeitig durch die entsprechende Bemessung des elliptischen Strömungskanal-Querschnitts ein gleicher Strömungsdurchsatz gewährleistet ist. Andererseits ergibt sich der synergetisch wirkende Effekt, dass die jeweils zwei, dem Strömungskanal zugeordneten Andrückelemente eine wiederum verbesserte Abdichtung der ellipsenförmigen Strömungskanäle entlang der Hauptachse des elliptischen Strömungskanal-Querschnitts bewirken.

Des Weiteren kann es zweckmäßig sein, dass die Strömungskanäle in Umfangsrichtung der Elektrolysevorrichtung verteilt vorgesehen sind, wobei der Normalabstand der Mittelachse zur Zellachse eines, dem jeweiligen Strömungskanal zugeordneten Andrückelements geringer ist als der Normalabstand der Hauptrichtung zur Zellachse des jeweiligen Strömungskanals. Besonders vorteilhaft ist dabei der durch die Andrückelemente entstehende, in Richtung des Innenbereichs der Elektrolysezelle versetzte Kraftkegel zur verbesserten Abdichtung der Strömungskanäle gegenüber diesem Innenbereich der Elektrolysezelle. Wie bereits im Vorfeld erwähnt, ist die Dichtheit der Strömungskanäle gegenüber dem Innenbereich der Elektrolysezelle auf Grund der Reaktivität der Produktgase der Elektrolyse besonders wichtig. Mit dieser Maßnahme wird somit eine verbesserte Betriebssicherheit gewährleistet.

Ferner kann vorgesehen sein, dass das zumindest eine Halteelement eine Führungsanordnung umfasst, durch welche die erste Druckplatte und/oder die zweite Druckplatte relativ zum ersten Widerlagerelement und/oder zweiten Widerlagerelement entlang der Zellachse verstellbar geführt ist. Durch diese vorteilhafte Ausgestaltungsform ist die Dichtheit der Elektrolysevorrichtung durch das Führen der Druckplatten in dynamisch auftretenden Betriebsarten bzw. Betriebszuständen zu jedem Zeitpunkt in optimaler Weise gegeben. Vor allem im Hinblick auf stark schwankende Temperaturen und somit resultierende Wärmeausdehnungen der Komponenten der Elektrolysevorrichtung wird durch die dargelegte Ausgestaltungsform ein übermäßiges Gleiten der plattenförmigen Elemente verhindert. Gleichzeitig wird eine Schonung aller Komponenten der Elektrolysevorrichtung erreicht, da dynamische Effekte abgefedert werden, so zum Beispiel eine übermäßige Flächenpressung durch Temperaturausdehnung von einzelnen sensiblen Elementen vermieden wird. In weiterer Folge sind somit dünnere plattenförmige Elemente verwendbar, was weitreichende produktionstechnische und somit auch wirtschaftliche positive Effekte mit sich bringt. Vor allem auch im Hinblick auf eine wirtschaftliche Austauschbarkeit von Einzelkomponenten und ein damit verbundener ressourcenschonender Betrieb über mehrere Lebenszyklen einer Elektrolysevorrichtung kommt diese vorteilhafte Ausgestaltungsform zu tragen.

Gemäß einer besonderen Ausprägung ist es möglich, dass das zumindest eine Halteelement einen Bolzen, einen Stift, ein Seil oder insbesondere eine Schraube umfasst, oder durch wenigstens eines dieser Elemente gebildet ist, welches zumindest eine Halteelement die erste und die zweite Druckplatte in Richtung der Zellachse durchsetzt. Somit entsteht zum einen eine sehr kompakte Bauweise der gesamten Elektrolysevorrichtung, was weitreichende Vorteile hinsichtlich der Verwendung derselben in einer beispielsweise modular aufgebauten Anlage mit sich bringt. Zum zweiten wird durch diese Ausprägung eine ideale, insbesondere eine möglichst verklemmungsfreie bzw. leichtgängige Führung der Druckplatten entlang der Führungsanordnung begünstigt, was im Umkehrschluss eine vergleichmäßigte Flächenpressung zwischen den plattenförmigen Elementen gegenüber herkömmlichen Ausführungsformen zur Folge hat.

Vorteilhaft ist auch eine Ausprägung, gemäß welcher vorgesehen sein kann, dass die elastisch verformbaren Andrückelemente durch Schraubenfedern und/oder Tellerfedern, insbesondere durch gleichgeschichtete Tellerfedern gebildet sind, wobei eine erste Gruppe dieser Andrückelemente von jeweils einem Halteelement in Richtung der Zellachse durchsetzt sind. Somit entsteht eine Vergleichmäßigung der Pressung über den gesamten Querschnitt der Elektrolysevorrichtung und damit auch für die Elektrolysezelle eine verbesserte Abdichtung. Auch wird das temperatur- und druckbedingte Gleiten der plattenförmigen Elemente durch die Vermeidung von lokalen Spannungsspitzen verbessert. Gleichzeitig wird durch diese Vergleichmäßigung die Verwendung von dünneren Druckplatten möglich und es ist die Möglichkeit geschaffen, dass Druckplatten aus Kunststoffen oder anderen weniger steifen Materialien als Metallen Verwendung finden. Es wird somit die Gewährleistung der Steifigkeit und Stabilität der Elektrolysevorrichtung auf die Widerlagerelemente übertragen und gleichzeitig eine verbesserte Abdichtung bei dynamischer Betriebsführung durch die erhöhte Flexibilität der Druckplatten erreicht.

Darüber hinaus kann vorgesehen sein, dass eine zweite Gruppe der Andrückelemente durch die den Strömungskanälen zugeordneten Andrückelemente gebildet ist, welche Andrückelemente der zweiten Gruppe eine unterschiedliche, insbesondere eine höhere Andrückkraft aufweisen als die Andrückelemente der ersten Gruppe. Somit ist eine vorteilhafte Ausgestaltungsform geschaffen, bei der die Pressung der plattenförmigen Elemente über die gesamte Kontaktfläche entsprechend der Anforderungen bezüglich des Gleitens der plattenförmigen Komponenten bei Wärmeausdehnung und/oder Druckbeanspruchungen in idealer Weise beherrscht werden kann. Beispielsweise kann eine hohe Andrückkraft im Bereich der Strömungskanäle und eine vergleichsweise niedrigere Andrückkraft, unter Berücksichtigung der entstehenden und sich überlagernden Kraftkegel, eingestellt werden, um dem Gleiten der plattenförmigen Elemente eine definierte Ausdehnungsrichtung, eine definierte Ausdehnungsform und Größenordnung bezüglich der betrieblichen Anforderungszustände aufzuprägen.

Insbesondere kann es vorteilhaft sein, dass jeweils zumindest ein elastisch verformbares Andrückelement zwischen jedem der einander nächstliegenden Paare aus jeweils einem Widerlagerelement und einer Druckplatte angeordnet ist. Vorteilhaft ist dabei, dass die Pressung der plattenförmigen Elemente ausgehend von beiden Seiten bzw. von beiden axialen Enden der Elektrolysevorrichtung einstellbar ist, beziehungsweise in optimaler Weise ausgeführt ist, um die Dichtheit längs der Zellachse über alle plattenförmigen Elemente zu gewährleisten. Die Wirkung des Druckelements ist somit durch die beidseitige Anordnung über die Länge des Zellstapels vergleichmäßigt, wodurch sich vor allem der weiterführende Synergieeffekt ergibt, dass Elektrolysevorrichtungen mit einer Mehrzahl von Elektrolysezellen in idealer Weise, wie bereits erläutert, abdichtbar sind. Somit ist ein wirtschaftlicher Vorteil gegenüber den bekannten Ausführungsformen erzielbar, wobei in weiterer Folge die bereits oben beschriebenen Vorteile bezüglich der Schonung von Ressourcen zur Herstellung von Einzelkomponenten der Elektrolysevorrichtung verstärkt werden.

Des Weiteren kann es zweckmäßig sein, wenn die Abdichtungsmittel, bzw. die Abdichtungsvorrichtung bezüglich der Anzahl und/oder Ausgestaltung der elastisch verformbaren Andrückelemente asymmetrisch bezogen auf eine normal zur Zellachse ausgerichtete Mittelebene der Elektrolysevorrichtung ausgestaltet ist. Da bei einer Elektrolysevorrichtung mit mehreren Halbzellen innerhalb der Elektrolysezelle die Druckniveaus und Temperaturbeanspruchungen nicht zwingend gleichverteilt entlang der Zellachse oder symmetrisch bezogen auf eine Normalebene der Zellachse sind, ist es von Vorteil, dass mittels der elastisch verformbaren Andrückelemente auf diese Inhomogenität reagiert wird. Somit bewirkt die individuelle Anpassung der Andrückelemente den vorteilhaften Effekt einer wiederum verbesserten Abdichtung der gesamten Elektrolysevorrichtung über die gesamte Ausdehnungslänge dergleichen entlang der Zellachse.

Entsprechend einer vorteilhaften Weiterbildung kann vorgesehen sein, dass das zumindest eine elastische Andrückelement jeweils mittels im jeweiligen Widerlagerelement und/oder in der jeweiligen Druckplatte vorgesehenen Taschen und/oder einem Dorn in Richtung der Zellachse gleitbar positioniert ist. Vorteilhaft ist dabei die präzise Positionierung des zumindest einen Andrückelements. Weiters ergibt sich durch diese Weiterbildung die einfache Möglichkeit der Verwendung von Andrückelementen, welche aus nicht fest verbundenen Einzelelementen zusammengesetzt sind, wodurch eine präzise Beeinflussung der Druckfeder-Kennlinie der Andrückelemente aber auch der Linienpressung derselben an deren Kontaktflächen mit Widerlagerelement und Druckplatte umsetzbar ist. Insbesondere kann in weiterer Folge die maximale Federauslenkung durch diese Weiterbildung beeinflusst werden, was besonders im Hinblick auf eine Indikation der Betriebsgrenzen der Elektrolysevorrichtung vorteilhaft ist, um etwaige Schäden oder Überbeanspruchungen frühzeitig zu erkennen.

Darüber hinaus kann vorgesehen sein, dass die Steifigkeit einer Druckplatte geringer oder gleich wie die Steifigkeit des ihr nächstliegenden Widerlagerelements ist. Von Vorteil ist dabei, dass Bauteilunebenheiten von der Druckplatte aufgenommen bzw. zumindest teilweise kompensiert werden, wobei gleichzeitig das Widerlagerelement im Verbund der gesamten Abdichtungsvorrichtung die Stabilität der Elektrolysevorrichtung gewährleistet. Gleichzeitig können so Ermüdungserscheinungen der Andrückelemente ausgeglichen werden.

Des Weiteren kann vorgesehen sein, dass die Druckplatte für die elastischen Andrückelemente ebenflächige Aufnahmeflächen aufweist, welche Aufnahmeflächen mittels stegartiger Strukturelemente verbunden sind. Vorteilhaft ist dabei, dass die ebenflächigen Aufnahmeflächen entsprechend deren Anforderungen auf Grund der Belastung durch die Andrückelemente in Verbindung mit den stegartigen Strukturelementen die Ausbildung eines spezifizierten Kraftkegels zur präzisen Abdichtung der Strömungskanäle verbessern. Gleichzeitig wird durch den gerichteten Kraftfluss durch eine geeignete Anordnung der stegartigen Strukturelemente eine Einsparung an Materialeinsatz für die Druckplatten umgesetzt, was nicht nur ressourcenschonend ist, sondern in weiterer Folge auch wirtschaftliche Vorteile mit sich bringt.

Weiters ist ein Verfahren zur Abdichtung einer Elektrolysevorrichtung vorgesehen, wobei ein erstes Paar aus einer Druckplatte und einem nächstliegenden Widerlagerelement mit dem ersten Paar zugeordneten Andrückelementen mittels einer Vorspannvorrichtung vorgespannt und entlang der Zellachse angeordnet wird. In weiterer Folge wird zumindest eine Elektrolysezelle aufgebaut aus plattenförmigen Elementen an das erste Paar anschließend entlang der Zellachse gestapelt. Zudem wird ein zweites Paar aus einer Druckplatte und einem nächstliegenden Widerlagerelement mit dem zweiten Paar zugeordneten Andrückelementen mittels einer weiteren Vorspannvorrichtung vorgespannt und an die zumindest eine Elektrolysezelle anschließend entlang der Zellachse angereiht. Weiters wird mittels zumindest einem Halteelement das Widerlagerelement des ersten Paares mit dem Widerlagerelement des zweiten Paares in einem vorbestimmten Abstand gehalten. Schließlich wird jede Vorspannvorrichtung von dem jeweiligen Paar aus Druckplatte und Widerlagerelement gelöst und die Vorspannkraft der Abdichtungsvorrichtung wird mittels dem zumindest einem Halteelement feinjustiert, sodass die Abdichtung der plattenförmigen Elemente der zumindest einen Elektrolysezelle und somit der Elektrolysevorrichtung erreicht wird.

Von Vorteil ist bei diesem Verfahren vor allem, dass das jeweilige Paar aus Druckplatte und nächstliegendem Widerlagerelement mit den zugehörigen Andrückelementen in vorgespanntem Zustand entlang der Zellachse gestapelt bzw. gereiht wird. Somit wird im Montageverfahren bereits eine vordefinierte Vorspannung und somit Abdichtung der Elektrolysevorrichtung mittels der Abdichtungsvorrichtung ermöglicht. Des Weiteren ist eine Vergleichmäßigung der Druckkraft auf die Flachseiten der plattenförmigen Elemente erreichbar, wodurch keine inhomogene Belastungssituation während dem Montageprozess auftritt. Damit wird eine radiale gleichmäßige Verspannung erreicht, die insbesondere im Hinblick auf die Lebensdauer der verwendeten plattenförmigen Elementen vorteilhaft ist.

Zum besseren Verständnis der Erfindung wird diese anhand der nachfolgenden Figuren näher erläutert.

Es zeigen jeweils in stark vereinfachter, schematischer und beispielhafter Darstellung:
- Fig. 1: eine Explosionszeichnung einer möglichen Ausgestaltungsform der Elektrolysevorrichtung;
- Fig. 2: die Elektrolysevorrichtung nach Fig. 1 in perspektivischer Darstellung;
- Fig. 3: eine Schnittdarstellung durch die Elektrolysezelle der Elektrolysevorrichtung zur Veranschaulichung einer möglichen Ausgestaltungsform der Strömungskanäle durch die plattenförmigen Elemente der Elektrolysezelle im Zusammenhang mit der Anordnung von federelastischen Andrückelementen;
- Fig. 4: eine Darstellung eines Längsschnittes durch die Elektrolysevorrichtung in stark vereinfachter und schematischer Darstellung;
- Fig. 5: eine Darstellung der projizierten Querschnitte der Andrückelemente, Strömungskanäle und Halteelemente in einer erfinderischen Ausgestaltungsformen der Anordnung der Andrückelemente;
- Fig. 6: eine mögliche Ausgestaltungsform der Druckplatte und der Strömungskanäle durch die plattenförmigen Elemente;
- Fig. 7: eine mögliche Ausgestaltungsform der Druckplatte in stark vereinfachter und schematischer Darstellung;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Entsprechend der Bezugszeichenliste werden Begriffe aus der Bezugszeichenliste mit und/oder ohne bestimmten Index in der Beschreibung verwendet. Sofern eine genaue Differenzierung der Begriffe hinsichtlich deren spezifischer Ausgestaltungsform nicht notwendig ist, werden keine Indizes verwendet. Im Umkehrschluss kann beispielsweise ein Andrückelement 12a von einem Andrückelement 12b entsprechend der jeweiligen Beschreibung differenziert werden, wobei beides weiterhin jeweils ein Andrückelement 12 ist.

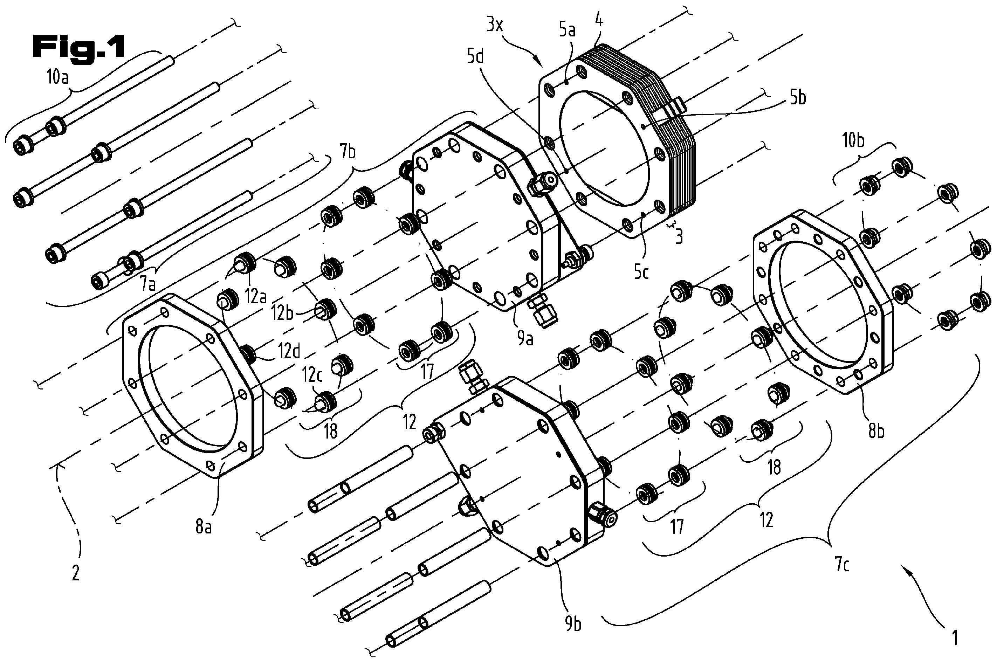

In der Fig. 1 ist eine Explosionszeichnung einer Ausführungsform der Elektrolysevorrichtung 1 gezeigt. Die Elektrolysevorrichtung 1 umfasst zumindest eine entlang der Zellachse 2 angeordnete Elektrolysezelle 3, welche Elektrolysezelle 3 aus plattenförmigen Elementen 4 entlang der Zellachse 2 gestapelt aufgebaut sein kann. Die plattenförmigen Elemente 4 können Strömungskanäle 5 umfassen, welche durch Durchbrüche in den plattenförmigen Elementen 4 gebildet sind. Insbesondere werden die parallel oder im Wesentlichen parallel zur Zellachse 2 verlaufenden Strömungskanäle 5 durch die Durchbrüche in den seriell aneinandergereihten bzw. aneinander anliegenden, plattenförmigen Elemente 4 gebildet. Weiters umfasst die Elektrolysevorrichtung 1 Abdichtungsmittel, insbesondere wenigstens eine Abdichtungsvorrichtung 7, die in der Fig. 1 ob der Darstellbarkeit in die Teile 7a, 7b und 7c unterteilt ist, welche Abdichtungsvorrichtung 7 zwei Widerlagerelemente 8, zwei Druckplatten 9 und elastisch verformbare Andrückelemente 12 umfassen kann. Des Weiteren können die Strömungskanäle 5 eine fluidische Verbindung zu den Druckplatten 9 aufweisen, wenn beispielsweise in den Druckplatten 9 etwaige Umlenkkänale, Verbindungskanäle und/oder Fluidanschlüsse für die Elektrolysevorrichtung 1 vorgesehen sind. Wie dargestellt kann die Elektrolysevorrichtung 1 Halteelemente 10 umfassen, welche Halteelemente 10 in dieser möglichen Ausführungsform mittels Schrauben 10a und Muttern 10b realisiert sind. Es ist ersichtlich, dass die plattenförmigen Einzelkomponenten der Elektrolysevorrichtung 1 entlang der Zellachse 2 gestapelt bzw. aneinandergereiht angeordnet sind und dass die Abdichtungsvorrichtung 7 aus zwei Paaren aus jeweils einer Druckplatte 9 und dem nächstliegenendem Widerlagerelement 8 mit dazwischenliegenden Andrückelementen 12 ausgebildet sein kann. Die Elektrolysezelle 3 ist zwischen diesen beiden jeweils stirnseitig angeordneten Paaren aus jeweils einer Druckplatte 9 und einem jeweils nächstliegenden Widerlagerelement 8 angeordnet. Es besteht die Möglichkeit, dass eine Mehrzahl von Elektrolysezellen 3x zwischen diesen Paaren angeordnet ist. Mit anderen Worten ausgedrückt sind die Paare aus jeweils einer Druckplatte 9 und jeweils einem nächstliegenden Widerlagerelement 8 in Bezug auf die Zellachse 2 an den axialen Stirnenden der Elektrolysevorrichtung 1 ausgebildet.

Weiters kann vorgesehen sein, dass jedem der Strömungskanäle 5a, 5b, 5c und 5d jeweils zumindest ein elastisch verformbares Andrückelement 12a, 12b, 12c, 12d zugeordnet ist. Wie in der dargestellten Ausführungsform gezeigt, können die Andrückelemente 12 beispielsweise als gleichgeschichtete Tellerfederen ausgegeführt sein. Eine erste Gruppe 17 dieser Andrückelemente 12 kann von jeweils einem Halteelement 10 in Richtung der Zellachse 2 durchsetzt sein. Weiters kann eine zweite Gruppe 18 der Andrückelemente 12 durch die den Strömungskanälen 5a, 5b, 5c und 5d zugeordneten Andrückelemente 12 gebildet sein. Zu dieser zweiten Gruppe 18 können ergänzend, wie beispielhaft in dieser Ausführungsform gezeigt, auch weitere Andrückelemente 12 zugeordnet sein. Die Andrückelemente 12 der zweiten Gruppe 18, vor allem die Andrückelemente 12, welche jeweils einem Strömungskanal 5 zugeordnet sind, können eine unterschiedliche, insbesondere eine höhere Andrückkraft aufweisen als die Andrückelemente der ersten Gruppe 17

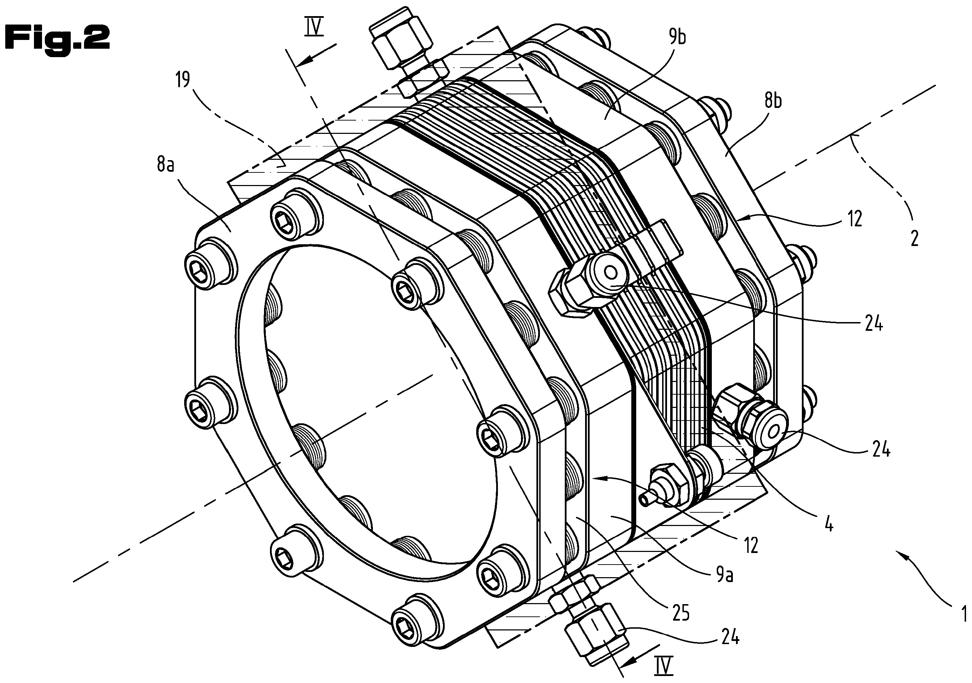

Fig. 2 zeigt die Ausgestaltungsform der Elektrolysevorrichtung nach Fig. 1 in zusammengebautem Zustand. Zur Versorgung der Elektrolysevorrichtung 1 und/oder zur Abfuhr von Produkten der Elektrolysevorrichtung 1 können in den Druckplatten 9a und 9b entsprechende Fluidanschlüsse 24 vorgesehen sein, wobei in diesem Sinne auch gasförmige Komponenten oder Mehrphasengemische über die Fluidanschlüsse 24 zu- und/oder abgeführt werden können. Somit können, wie bereits erwähnt, Strömungskanäle 5 der Elektrolysevorrichtung 1 eine fluidische Verbindung in den Druckplatten 9 zu den Fluidanschlüssen 24 aufweisen. Auch ist eine Ausführungsform denkbar, bei welcher alle Fluidanschlüsse 24 der Elektrolysevorrichtung 1 an einer gemeinsamen Druckplatte 9 oder an einer Flachseite 25 einer Druckplatte 9 angeordnet sind.

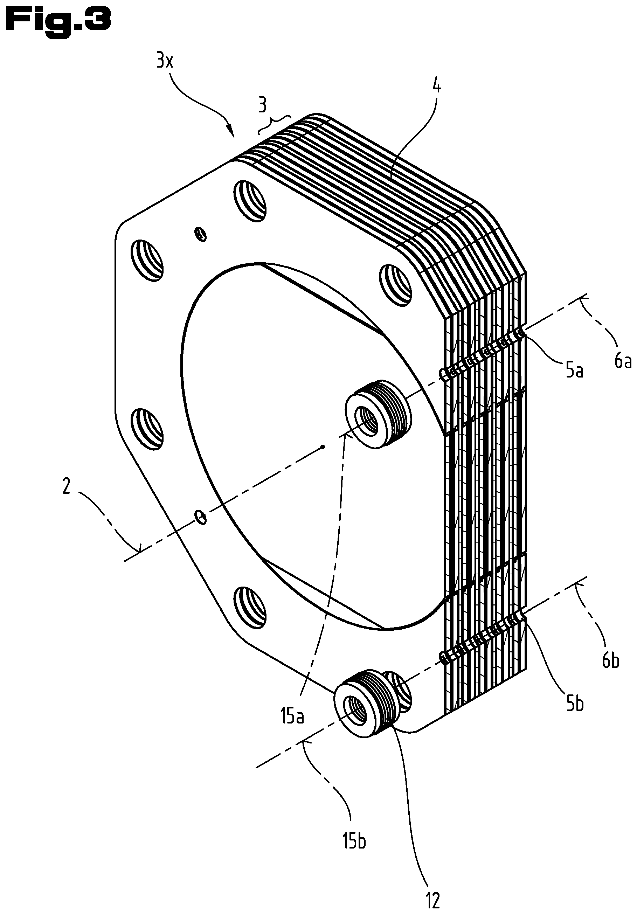

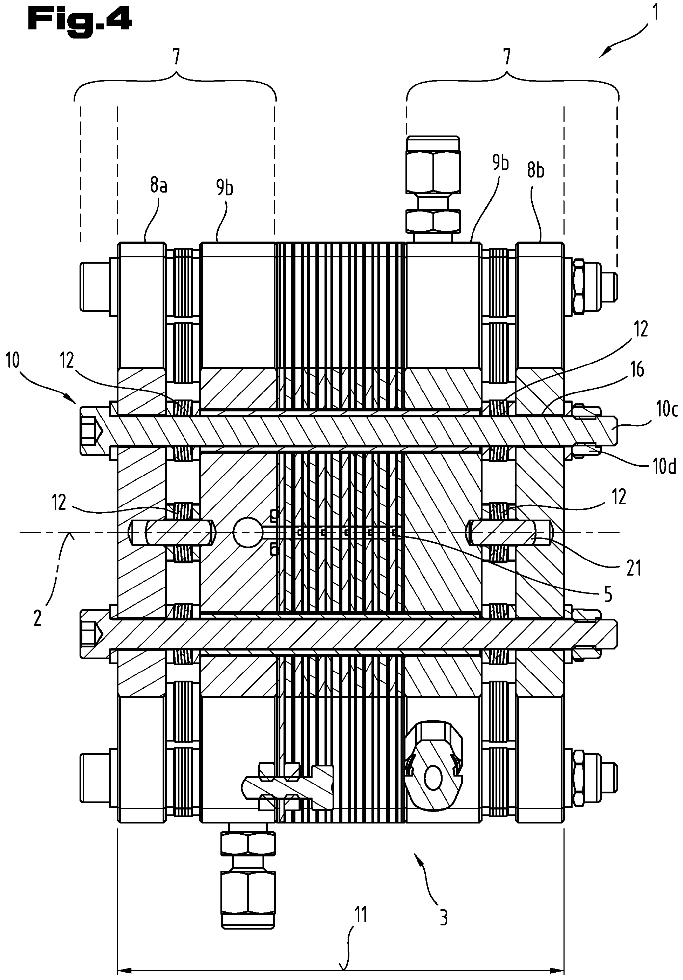

In der Fig. 3 sind die Strömungskanäle 5 in den plattenförmigen Elementen 4 der Elektrolysezelle 3 im Zusammenhang mit der Anordnung der Andrückelemente 12 gezeigt, wobei wiederum für gleiche Teile gleiche Bezugszeichen bzw. Bauteilbezeichnungen wie in den vorangegangenen Fig. 1 und Fig. 2 verwendet werden. Um unnötige Wiederholungen zu vermeiden, wird auf die detaillierte Beschreibung in den vorangegangenen Fig. 1 und Fig. 2 hingewiesen bzw. Bezug genommen. Es zeigt die Fig. 3 eine Mehrzahl and Elektrolysezellen 3x, welche aus plattenförmigen Elementen 4 entlang der Zellachse 2 aufgebaut sind. Bei dieser gegebenenfalls eigenständigen Ausführungsform ist ersichtlich, dass einem jeweiligen Strömungskanal 5a und/oder 5b jeweils ein Andrückelement 12a, 12b zugeordnet sein kann, wobei die jeweilige Mittelachse 15a, 15b von jedem der Andrückelemnete 12a, 12b zur Hauptrichtung 6a, 6b des jeweiligen Strömungskanals 5a und/oder 5b fluchtend ausgerichtet sein kann. Vorzugsweise ist an jedem der beiden axialen Stirnenden der Elektrolysevorrichtung 1 jeweils eine Gruppe von Andrückelementen 12a, 12b vorgesehen, wie dies am besten aus Fig. 4 ersichtlich ist.

In der Fig. 4 ist eine Darstellung eines Längsschnittes durch die Elektrolysevorrichtung 1 gezeigt, wobei wiederum für gleiche Teile gleiche Bezugszeichen bzw. Bauteilbezeichnungen wie in den vorangegangenen Fig. 1, Fig. 2 und Fig. 3 verwendet werden. Um unnötige Wiederholungen zu vermeiden, wird auf die detaillierte Beschreibung in den vorangegangenen Fig. 1, Fig. 2 und Fig. 3 hingewiesen bzw. Bezug genommen. Es zeigt die Fig. 4, dass ein Halteelement 10 eine Führungsanordnung 16 umfassen kann, durch welche die erste Druckplatte 9a und/oder die zweite Druckplatte 9b relativ zum ersten Widerlagerelement 8a und/oder zweiten Widerlagerelement 8b entlang der Zellachse 2 verstellbar geführt ist. Dadurch ergeben sich die bereits geschilderten vorteilhaften Effekte bezüglich der Dichtwirkung der Abdichtungsvorrichtung bzw. der Abdichtungsmittel 7. Weiters kann ein Halteelement 10 durch eine Kombination aus einer Schraube 10c mit einer Mutter 10d gebildet sein, welches zumindest eine Halteelement 10 die erste und die zweite Druckplatte 9a, 9b in Richtung der Zellachse 2 durchsetzt. Weiters kann vorgesehen sein, dass Andrückelemente 12 mittels einem im jeweiligen Widerlagerelement 8 und/oder in der jeweiligen Druckplatte 9 vorgesehenem Dorn 21 in Richtung der Zellachse 2 gleitbeweglich positioniert sind.

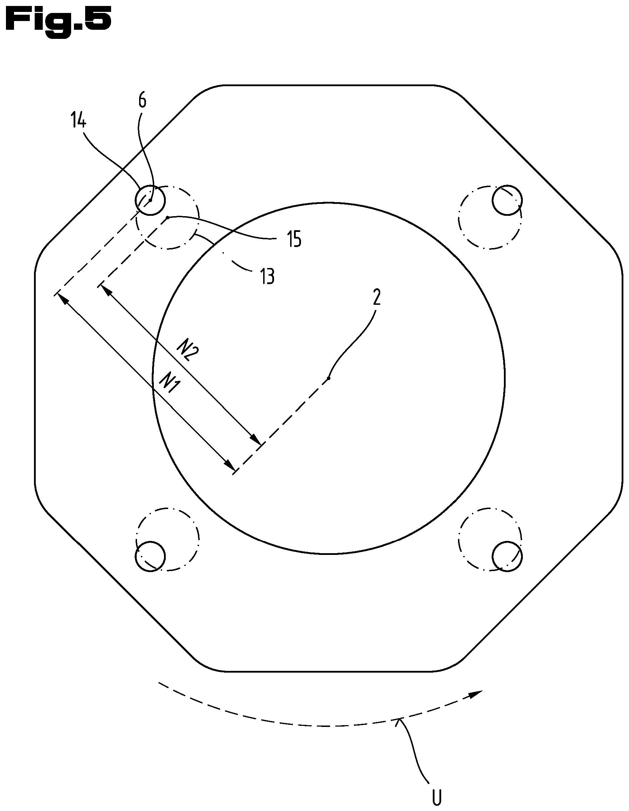

In der Fig. 5 ist eine Anordnung bzw. Relativpositionierung der projizierten Querschnitte der Andrückelemente 12, der Strömungskanäle 5 und Halteelemente 10 gezeigt, wobei wiederum für gleiche Teile gleiche Bezugszeichen bzw. Bauteilbezeichnungen wie in den vorangegangenen Fig. 1 bis Fig. 4 verwendet werden. Um unnötige Wiederholungen zu vermeiden, wird auf die detaillierte Beschreibung in den vorangegangenen Fig. 1 bis Fig. 4 hingewiesen bzw. Bezug genommen. Es zeigt die Fig. 5 entsprechend des Anspruchs 1 eine Elektrolysevorrichtung 1, wobei ein entlang der Zellachse 2 projizierter Andrückelement-Querschnitt 13 von wenigstens einem der Andrückelemente 12 gegenüber einem entlang der Zellachse 2 projizierten Strömungskanal-Querschnitt 14 zumindest teilweise überdeckend positioniert ist. Weiters ist gezeigt, dass die Strömungskanäle 5 in Umfangsrichtung U der Elektrolysevorrichtung 1 verteilt vorgesehen sein können, wobei der Normalabstand N2 der Mittelachse 15 zur Zellachse 2 eines, dem jeweiligen Strömungskanal 5 zugeordneten Andrückelements 12 geringer sein kann als der Normalabstand N1 der Hauptrichtung 6 zur Zellachse 2 des jeweiligen Strömungskanals 5. Diese Ausführungsform bewirkt die bereits beschriebenen vorteilhaften Effekte, wobei auch eine Ausführungsform denkbar ist, bei welcher der Normalabstand N1 geringer oder gleich dem Normalabstand N2 sein kann. Diese mögliche Ausführungsform ist denkbar, wenn konstruktive Vorteile gegenüber einer anderen möglichen Ausführungsform überwiegen. Um dennoch die beschriebenen vorteilhaften Effekte herbeizuführen ist des Weiteren dankbar, dass Andrückelemente 12 mit einer konstruktiv bedingt gerichteten Kraftwirkung Verwendung finden.

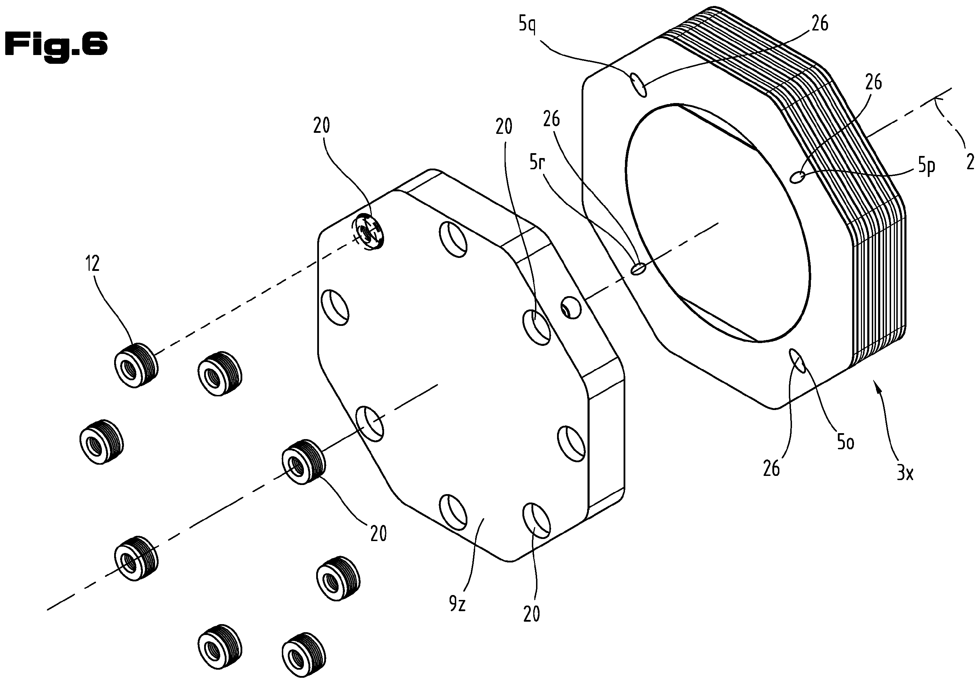

In der Fig. 6 ist eine Ausführungsform einer Druckplatte 9 und der Strömungskanäle 5 durch die plattenförmigen Elemente 4 gezeigt, wobei wiederum für gleiche Teile gleiche Bezugszeichen bzw. Bauteilbezeichnungen wie in den vorangegangenen Fig. 1 bis Fig. 5 verwendet werden. Um unnötige Wiederholungen zu vermeiden, wird auf die detaillierte Beschreibung in den vorangegangenen Fig. 1 bis Fig. 5 hingewiesen bzw. Bezug genommen. Es zeigt die Fig. 6, dass vorgesehen sein kann, dass Andrückelemente 12 mittels im jeweiligen Widerlagerelement 8 und/oder in der jeweiligen Druckplatte 9z vorgesehenen Taschen 20 in Richtung der Zellachse 2 gleitbeweglich gehaltert bzw. positioniert sein können. Weiters ist die mögliche Ausgestaltungsform der Strömungskanäle 5o und 5p in Form eines jeweiligen ellipsenförmigen Durchbruchs 26 gezeigt. Diese mögliche Ausgestaltungsform der Elektrolysevorrichtung 1 bringt die zuvor geschilderten vorteilhaften Effekte mit sich.

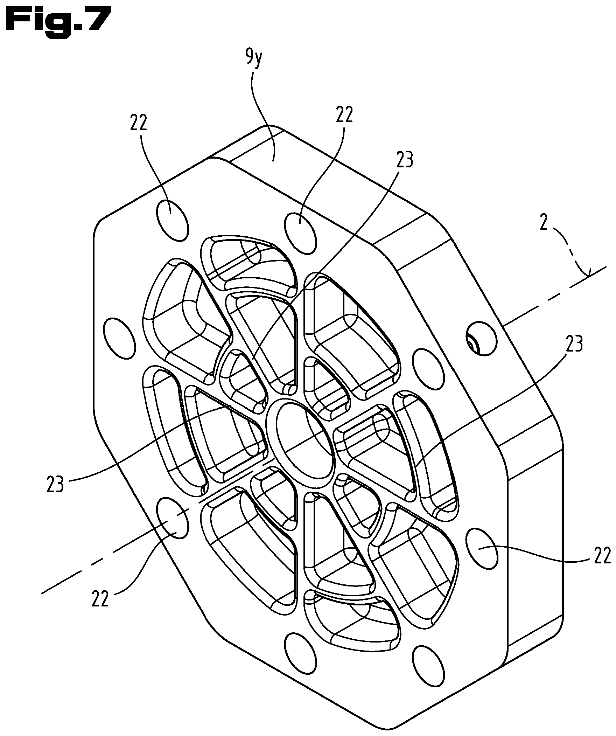

In der Fig. 7 ist eine Ausführungsform einer Druckplatte 9y in stark vereinfachter und schematischer Darstellung gezeigt, wobei wiederum für gleiche Teile gleiche Bezugszeichen bzw. Bauteilbezeichnungen wie in den vorangegangenen Fig. 1 bis Fig. 6 verwendet werden. Um unnötige Wiederholungen zu vermeiden, wird auf die detaillierte Beschreibung in den vorangegangenen Fig. 1 bis Fig. 6 hingewiesen bzw. Bezug genommen. Es zeigt diese Ausführungsform, dass die Druckplatte 9y für die elastischen Andrückelemente 12 ebenflächige Aufnahmeflächen 22 aufweisen kann, welche Aufnahmeflächen 22 mittels stegartiger Strukturelemente 23 verbunden sein können. Die stegartigen Strukturelemente 22 können bezüglich der Zellachse 2 rotationssymmetrisch angeordnet sein, sodass sich ein rotationssymmetrisches Muster der Aussparungen aus der Druckplatte 9y ergeben kann. Diese Ausführungsform bewirkt die zuvor geschilderten vorteilhaften Effekte, wobei darüber hinaus erzielbar ist, dass in Bezug auf die Materialwahl der Druckplatte 9y nunmehr Kunststoffe oder weniger steife Materialien als Metalle vorgesehen sein können.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Elektrolysevorrichtung
- 2: Zellachse
- 3: Elektrolysezelle
- 4: plattenförmige Elemente
- 5: Strömungskanal
- 6: Hauptrichtung
- 7: Abdichtungsmittel
- 8: Widerlagerelement
- 9: Druckplatte
- 10: Halteelement
- 11: Abstand
- 12: Andrückelement
- 13: Andrückelement-Querschnitt
- 14: Strömungskanal-Querschnitt
- 15: Mittelachse
- 16: Führungsanordnung
- 17: erste Gruppe
- 18: zweite Gruppe
- 19: Mittelebene
- 20: Taschen
- 21: Dorn
- 22: Aufnahmeflächen
- 23: Strukturelemente
- 24: Fluidanschlüsse
- 25: Flachseite
- 26: ellipsenförmiger Durchbruch

## Patentansprüche

1. Elektrolysevorrichtung (1) zur Erzeugung von gasförmigem Wasserstoff, umfassend
- zumindest eine entlang einer Zellachse (2) verlaufende Elektrolysezelle (3), welche aus entlang der Zellachse (2) aneinandergereihten plattenförmigen Elementen (4) aufgebaut ist,
- zumindest zwei durch Durchbrüche in den plattenförmigen Elementen (4) gebildete Strömungskanäle (5a, 5b), deren Hauptrichtungen (6a, 6b) entlang der Zellachse (2) verlaufen,
- Abdichtungsmittel (7) zur Gewährleistung der Dichtheit der Elektrolysevorrichtung (1), die Abdichtungsmittel (7) umfassend
- ein erstes Widerlagerelement (8a) und ein zweites Widerlagerelement (8b), welche Widerlagerelemente (8) in Richtung der Zellachse (2) zueinander beabstandet sind,
- eine erste Druckplatte (9a) und eine zweite Druckplatte (9b), welche in Richtung der Zellachse (2) zueinander beabstandet und zwischen dem ersten Widerlagerelement (8a) und dem zweiten Widerlagerelement (8b) angeordnet sind, wobei die zumindest eine Elektrolysezelle (3) zwischen der ersten Druckplatte (9a) und der zweiten Druckplatte (9b) angeordnet ist,
- zumindest eine Halteelement (10), welches dazu ausgebildet ist das erste Widerlagerelement (8a) und das zweite Widerlagerelement (8b) entlang der Zellachse (2) in einem vorbestimmten Abstand (11) zu halten,
- und zumindest ein elastisch verformbares Andrückelement (12) zumindest zwischen einem einander nächstliegenden Paar aus einem Widerlagerelement (8) und einer Druckplatte (9),
**dadurch gekennzeichnet, dass**
jedem der Strömungskanäle (5a, 5b) jeweils zumindest ein elastisch verformbares Andrückelement (12a, 12b) zugeordnet ist, und
dass ein entlang der Zellachse (2) projizierter Andrückelement-Querschnitt (13) von wenigstens einem dieser Andrückelemente (12a, 12b) gegenüber einem entlang der Zellachse (2) projizierten Strömungskanal-Querschnitt (14) zumindest teilweise überdeckend positioniert ist.

2. Elektrolysevorrichtung (1) nach Anspruch 1, **dadurch gekennzeichnet, dass** jedem der Strömungskanäle (5a, 5b) jeweils ein Andrückelement (12a, 12b) zugeordnet ist und dass eine Mittelachse (15a, 15b) von jedem der Andrückelemente (12a, 12b) zur Hauptrichtung (6a, 6b) der jeweiligen Strömungskanäle (5a, 5b) fluchtend ausgerichtet ist.

3. Elektrolysevorrichtung (1) nach einem der vorhergehenden Ansprüche, **dadurch gekennzeichnet, dass** die Strömungskanäle (5a, 5b) durch ellipsenförmige Durchbrüche in den plattenförmigen Elementen (4) gebildet sind und dass jedem Strömungskanal (5) jeweils zwei Andrückelemente (12) zugeordnet sind.

4. Elektrolysevorrichtung (1) nach einem der vorhergehenden Ansprüche, **dadurch gekennzeichnet, dass** die Strömungskanäle (5) in Umfangsrichtung der Elektrolysevorrichtung (1) verteilt vorgesehen sind, wobei der Normalabstand der Mittelachse (15) eines dem jeweiligen Strömungskanal (5) zugeordneten Andrückelements (12) zur Zellachse (2) geringer ist als der Normalabstand der Hauptrichtung (6) des jeweiligen Strömungskanals (5) zur Zellachse (2).

5. Elektrolysevorrichtung (1) nach einem der vorhergehenden Ansprüche, **dadurch gekennzeichnet, dass** das zumindest eine Halteelement (10) eine Führungsanordnung (16) umfasst, durch welche die erste Druckplatte (9a) und/oder die zweite Druckplatte (9b) relativ zum ersten Widerlagerelement (8a) und/oder zweiten Widerlagerelement (8b) entlang der Zellachse (2) verstellbar geführt ist.

6. Elektrolysevorrichtung (1) nach einem der vorhergehenden Ansprüche, **dadurch gekennzeichnet, dass** das zumindest eine Halteelement (10) einen Bolzen, einen Stift, ein Seil oder insbesondere eine Schraube umfasst, welches zumindest eine Halteelement (10) die erste und die zweite Druckplatte (9a, 9b) in Richtung der Zellachse (2) durchsetzt.

7. Elektrolysevorrichtung (1) nach einem der vorhergehenden Ansprüche, **dadurch gekennzeichnet, dass** die elastisch verformbaren Andrückelemente (12) durch Schraubenfedern und/oder Tellerfedern, insbesondere durch gleichgeschichtete Tellerfedern gebildet sind, wobei eine erste Gruppe (17) dieser Andrückelemente (12) von jeweils einem Halteelement (10) in Richtung der Zellachse (2) durchsetzt ist.

8. Elektrolysevorrichtung (1) nach Anspruch 7, **dadurch gekennzeichnet, dass** eine zweite Gruppe (18) der Andrückelemente (12) durch die den Strömungskanälen (5) zugeordneten Andrückelemente (12) gebildet ist, welche Andrückelemente (12) der zweiten Gruppe (18) eine unterschiedliche, insbesondere eine höhere Andrückkraft aufweisen als die Andrückelemente der ersten Gruppe (17).

9. Elektrolysevorrichtung (1) nach einem der vorhergehenden Ansprüche, **dadurch gekennzeichnet, dass** jeweils zumindest ein elastisch verformbares Andrückelement (12) zwischen jedem der einander nächstliegenden Paare aus jeweils einem Widerlagerelement (8) und einer Druckplatte (9) angeordnet ist.

10. Elektrolysevorrichtung (1) nach Anspruch 9, **dadurch gekennzeichnet, dass** die Abdichtungsmittel (7) bezüglich der Anzahl und/oder Ausgestaltung der elastisch verformbaren Andrückelemente (12) asymmetrisch bezogen auf eine normal zur Zellachse (2) ausgerichtete Mittelebene (19) der Elektrolysevorrichtung (1) ausgestaltet ist.

11. Elektrolysevorrichtung (1) nach einem der vorhergehenden Ansprüche, **dadurch gekennzeichnet, dass** das zumindest eine elastische Andrückelement (12) jeweils mittels im jeweiligen Widerlagerelement (8) und/oder in der jeweiligen Druckplatte (9) vorgesehenen Taschen (20) und/oder einem Dorn (21) in Richtung der Zellachse (2) gleitbar gehaltert und relativ zur Zellachse (2) positioniert gehaltert ist.

12. Elektrolysevorrichtung (1) nach einem der vorhergehenden Ansprüche, **dadurch gekennzeichnet, dass** die Steifigkeit einer Druckplatte (9) geringer oder gleich wie die Steifigkeit des ihr nächstliegenden Widerlagerelements (8) ist.

13. Elektrolysevorrichtung (1) nach einem der vorhergehenden Ansprüche, **dadurch gekennzeichnet, dass** die Druckplatte (9) für die elastischen Andrückelemente (12) ebenflächige Aufnahmeflächen (22) aufweist, welche Aufnahmeflächen (22) mittels stegartiger Strukturelemente (23) versteift sind.

14. Verfahren zur Abdichtung einer Elektrolysevorrichtung (1) nach einem der vorhergehenden Ansprüche, wobei
- ein erstes Paar aus einer Druckplatte (9) und einem nächstliegenden Widerlagerelement (8) mit diesem ersten Paar zugeordneten Andrückelementen (12) mittels einer Vorspannvorrichtung vorgespannt und entlang der Zellachse (2) angeordnet wird,
- zumindest eine Elektrolysezelle (3) aufgebaut aus plattenförmigen Elementen (4) an das erste Paar anschließend entlang der Zellachse (2) angereiht wird,
- ein zweites Paar aus einer Druckplatte (9) und einem nächstliegenden Widerlagerelement (8) mit diesem zweiten Paar zugeordneten Andrückelementen (12) mittels einer weiteren Vorspannvorrichtung vorgespannt und an die zumindest eine Elektrolysezelle (3) anschließend entlang der Zellachse (2) angereiht wird,
- mittels zumindest einem Halteelement (10) das Widerlagerelement (8) des ersten Paars mit dem Widerlagerelement (8) des zweiten Paares in einem vorbestimmten Abstand (11) gehalten wird,
- jede Vorspannvorrichtung von dem jeweiligen Paar aus Druckplatte (9) und Widerlagerelement (8) gelöst wird,
- und die Vorspannkraft des Abdichtungsmittels (7) mittels dem zumindest einem Halteelement (10) feinjustiert wird, sodass die Abdichtung der plattenförmigen Elemente (4) der zumindest einen Elektrolysezelle (3) gegenüber deren Umgebung erreicht wird.

## Claims

1. Electrolysis device (1) for producing gaseous hydrogen, comprising
- at least one electrolytic cell (3) extending along a cell axis (2), which is constructed from plate-shaped elements (4) arranged in a row along the cell axis (2),
- at least two flow channels (5a, 5b) formed by apertures in the plate-shaped elements (4), the main directions(6a, 6b) of which extend along the cell axis (2),
- sealing means (7) for ensuring the tightness of the electrolysis device (1), the sealing means (7) comprising
- a first abutment element (8a) and a second abutment element (8b), which abutment elements (8) are spaced apart from one another in the direction of the cell axis (2),
- a first pressure plate (9a) and a second pressure plate (9b), which are spaced apart from one another in the direction of the cell axis (2) and are arranged between the first abutment element (8a) and the second abutment element (8b), wherein the at least one electrolytic cell (3) is arranged between the first pressure plate (9a) and the second pressure plate (9b),
- at least one retaining element (10), which is configured to retain the first abutment element (8a) and the second abutment element (8b) along the cell axis (2) at a predetermined distance (11),
- and at least one elastically deformable pressure element (12) at least between a pair of an abutment element (8) and a pressure plate (9) that are closest to each other,
**characterized in that**
at least one elastically deformable pressure element (12a, 12b) is associated with each of the flow channels (5a, 5b), and
that a pressure element cross-section (13) projected along the cell axis (2) of at least one of these pressure elements (12a, 12b) is positioned so as to at least partially overlap a flow channel cross-section (14) projected along the cell axis (2).

2. Electrolysis device (1) according to claim 1, **characterized in that** a pressure element (12a, 12b) is associated with each of the flow channels (5a, 5b) and **in that** a central axis (15a, 15b) of each of the pressure elements (12a, 12b) is aligned with the main direction (6a, 6b) of the respective flow channels (5a, 5b).

3. Electrolysis device (1) according to any of the preceding claims, **characterized in that** the flow channels (5a, 5b) are formed by elliptical apertures in the plate-shaped elements (4) and **in that** each flow channel (5) is associated with two pressure elements (12).

4. Electrolysis device (1) according to any of the preceding claims, **characterized in that** the flow channels (5) are provided distributed in the circumferential direction of the electrolysis device (1), wherein the normal distance of the central axis (15) of a pressure element (12) associated with the respective flow channel (5) from the cell axis (2) is less than the normal distance of the main direction (6) of the respective flow channel (5) from the cell axis (2).

5. Electrolysis device (1) according to any of the preceding claims, **characterized in that** the at least one retaining element (10) comprises a guide arrangement (16), by means of which the first pressure plate (9a) and/or the second pressure plate (9b) is guided adjustably relative to the first abutment element (8a) and/or the second abutment element (8b) along the cell axis (2).

6. Electrolysis device (1) according to any of the preceding claims, **characterized in that** the at least one retaining element (10) comprises a bolt, a pin, a cable or in particular a screw, wherein the at least one retaining element (10) passes through the first and the second pressure plate (9a, 9b) in the direction of the cell axis (2).

7. Electrolysis device (1) according to any of the preceding claims, **characterized in that** the elastically deformable pressure elements (12) are formed by helical springs and/or disc springs, in particular by equally layered disc springs, wherein a first group (17) of these pressure elements (12) is passed through by a respective retaining element (10) in the direction of the cell axis (2).

8. Electrolysis device (1) according to claim 7, **characterized in that** a second group (18) of the pressure elements (12) is formed by the pressure elements (12) associated with the flow channels (5), wherein the pressing elements (12) of the second group (18) have a different, in particular a higher pressure force than the pressure elements of the first group (17).

9. Electrolysis device (1) according to any of the preceding claims, **characterized in that** at least one elastically deformable pressure element (12) is arranged between each of the nearest pairs of an abutment element (8) and a pressure plate (9).

10. Electrolysis device (1) according to claim 9, **characterized in that** the sealing means (7) is designed asymmetrically with respect to the number and/or configuration of the elastically deformable pressure elements (12) relative to a center plane (19) of the electrolysis device (1) aligned normal to the cell axis (2).

11. Electrolysis device (1) according to any of the preceding claims, **characterized in that** the at least one elastic pressure element (12) is retained so as to slide in the direction of the cell axis (2) by means of pockets (20) provided in the respective abutment element (8) and/or in the respective pressure plate (9) and/or a mandrel (21) and is retained so as to be positioned relative to the cell axis (2).

12. Electrolysis device (1) according to any of the preceding claims, **characterized in that** the stiffness of a pressure plate (9) is less than or equal to the stiffness of the abutment element (8) closest to it.

13. Electrolysis device (1) according to any of the preceding claims, **characterized in that** the pressure plate (9) for the elastic pressure elements (12) includes flat receiving surfaces (22), wherein the receiving surfaces (22) are stiffened by means of web-like structural elements (23).

14. Method for sealing an electrolysis device (1) according to any of the preceding claims, wherein
- a first pair of a pressure plate (9) and a nearest abutment element (8) with pressure elements (12) associated with this first pair are pretensioned by means of a pretensioning device and arranged along the cell axis (2),
- at least one electrolytic cell (3) made up of plate-shaped elements (4) is lined up next to the first pair along the cell axis (2),
- a second pair of a pressure plate (9) and a nearest abutment element (8) with pressure elements (12) associated with this second pair is pretensioned by means of a further pretensioning device and is then lined up next to the at least one electrolytic cell (3) along the cell axis (2),
- the abutment element (8) of the first pair is retained at a predetermined distance (11) from the abutment element (8) of the second pair by means of at least one retaining element (10),
- each pretensioning device is released from the respective pair of pressure plate (9) and abutment element (8),
- and the pre-tensioning force of the sealing means (7) is finely adjusted by means of the at least one retaining element (10), so that the sealing of the plate-shaped elements (4) of the at least one electrolytic cell (3) with respect to its surroundings is achieved.

## Revendications

1. Dispositif d'électrolyse (1) pour produire de l'hydrogène gazeux, comprenant
- au moins une cellule d'électrolyse (3) s'étendant le long d'un axe de cellule (2), qui est constituée d'éléments en forme de plaque (4) alignés les uns à côté des autres le long de l'axe de cellule (2),
- au moins deux canaux d'écoulement (5a, 5b) formés par des percées dans les éléments en forme de plaque (4), dont les directions principales (6a, 6b) s'étendent le long de l'axe de cellule (2),
- des moyens d'étanchéité (7) pour garantir l'étanchéité du dispositif d'électrolyse (1), les moyens d'étanchéité (7) comprenant
- un premier élément de butée (8a) et un deuxième élément de butée (8b), lesquels éléments de butée (8) sont espacés l'un de l'autre dans la direction de l'axe de cellule (2),
- une première plaque de pression (9a) et une deuxième plaque de pression (9b), qui sont espacées l'une de l'autre dans la direction de l'axe de cellule (2) et agencées entre le premier élément de butée (8a) et le deuxième élément de butée (8b), l'au moins une cellule d'électrolyse (3) étant agencée entre la première plaque de pression (9a) et la deuxième plaque de pression (9b),
- au moins un élément de retenue (10) qui est conçu pour maintenir le premier élément de butée (8a) et le deuxième élément de butée (8b) le long de l'axe de cellule (2) à une distance prédéterminée (11),
- et au moins un élément de pression (12) élastiquement déformable, au moins entre une paire la plus proche d'un élément de butée (8) et d'une plaque de pression (9),
**caractérisée en ce que**
chacun des canaux d'écoulement (5a, 5b) est attribué à au moins un élément de pression (12a, 12b) élastiquement déformable, et
**en ce qu'**une section transversale de l'élément de pression (13), projetée le long de l'axe de cellule (2) d'au moins un de ces éléments de pression (12a, 12b) est positionnée de manière à recouvrir au moins partiellement une section transversale du canal d'écoulement (14), projetée le long de l'axe de cellule (2).

2. Dispositif d'électrolyse (1) selon la revendication 1, **caractérisé en ce qu'**un élément de pression (12a, 12b) est attribué à chacun des canaux d'écoulement (5a, 5b) et **en ce qu'**un axe central (15a, 15b) de chacun des éléments de pression (12a, 12b) est aligné sur la direction principale (6a, 6b) des canaux d'écoulement (5a, 5b) respectifs.

3. Dispositif d'électrolyse (1) selon l'une des revendications précédentes, **caractérisé en ce que** les canaux d'écoulement (5a, 5b) sont formés par des percées elliptiques dans les éléments en forme de plaque (4) et **en ce que** deux éléments de pression (12) sont attribués à chaque canal d'écoulement (5).

4. Dispositif d'électrolyse (1) selon l'une des revendications précédentes, **caractérisé en ce que** les canaux d'écoulement (5) sont répartis dans la direction périphérique du dispositif d'électrolyse (1), la distance normale entre l'axe central (15) d'un élément de pression (12) attribué au canal d'écoulement (5) correspondant et l'axe de cellule (2) étant inférieure à la distance normale entre la direction principale (6) du canal d'écoulement (5) correspondant et l'axe de cellule (2).

5. Dispositif d'électrolyse (1) selon l'une des revendications précédentes, **caractérisé en ce que** l'au moins un élément de retenue (10) comprend un dispositif de guidage (16) par lequel la première plaque de pression (9a) et/ou la deuxième plaque de pression (9b) est guidée de manière réglable par rapport au premier élément de butée (8a) et/ou au deuxième élément de butée (8b) le long de l'axe de cellule (2).

6. Dispositif d'électrolyse (1) selon l'une des revendications précédentes, **caractérisé en ce que** le ou les éléments de retenue (10) comprennent un boulon, une goupille, un câble ou en particulier une vis, lequel ou lesquels éléments de retenue (10) traversent la première et la deuxième plaques de pression (9a, 9b) dans la direction de l'axe de cellule (2).

7. Dispositif d'électrolyse (1) selon l'une des revendications précédentes, **caractérisé en ce que** les éléments de pression (12) élastiquement déformables sont formés par des ressorts hélicoïdaux et/ou des ressorts à disques, en particulier par un empilement de ressorts à disques, un premier groupe (17) de ces éléments de pression (12) étant traversé par un élément de retenue (10) dans la direction de l'axe de cellule (2).

8. Dispositif d'électrolyse (1) selon la revendication 7, **caractérisé en ce qu'**un deuxième groupe (18) d'éléments de pression (12) est formé par les éléments de pression (12) attribués aux canaux d'écoulement (5), les éléments de pression (12) du deuxième groupe (18) présentant une force de pression différente, en particulier plus élevée, que les éléments de pression du premier groupe (17).

9. Dispositif d'électrolyse (1) selon l'une des revendications précédentes, **caractérisé en ce qu'**au moins un élément de pression (12) élastiquement déformable est agencé entre chacune des paires les plus proches les unes des autres, composées chacune d'un élément de butée (8) et d'une plaque de pression (9).

10. Dispositif d'électrolyse (1) selon la revendication 9, **caractérisé en ce que** les moyens d'étanchéité (7) sont disposés de manière asymétrique par rapport à un plan médian (19) du dispositif d'électrolyse (1) orienté perpendiculairement à l'axe (2) de la cellule, en ce qui concerne le nombre et/ou la configuration des éléments de pression (12) élastiquement déformables.

11. Dispositif d'électrolyse (1) selon l'une des revendications précédentes, **caractérisé en ce que** le ou les éléments de pression élastiques (12) sont maintenus de manière coulissante dans la direction de l'axe de cellule (2) et positionnés par rapport à l'axe de cellule (2) au moyen de poches (20) prévues dans l'élément de butée (8) et/ou dans la plaque de pression (9) respective et/ou d'un mandrin (21).

12. Dispositif d'électrolyse (1) selon l'une des revendications précédentes, **caractérisé en ce que** la rigidité d'une plaque de pression (9) est inférieure ou égale à la rigidité de l'élément de butée (8) le plus proche.

13. Dispositif d'électrolyse (1) selon l'une des revendications précédentes, **caractérisé en ce que** la plaque de pression (9) pour les éléments de pression élastiques (12) présente des surfaces de réception planes (22), lesquelles surfaces de réception (22) sont rigidifiées au moyen d'éléments structurels en forme de nervures (23).

14. Procédé pour étanchéifier un dispositif d'électrolyse (1) selon l'une des revendications précédentes, dans lequel
- une première paire composée d'une plaque de pression (9) et d'un élément de butée (8) adjacent à celle-ci avec des éléments de pression (12) attribués à cette première paire est précontrainte au moyen d'un dispositif de précontrainte et agencée le long de l'axe de cellule (2),
- au moins une cellule d'électrolyse (3) constituée d'éléments en forme de plaque (4) est alignée sur la première paire le long de l'axe de cellule (2),
- une deuxième paire composée d'une plaque de pression (9) et d'un élément de butée (8) adjacent avec des éléments de pression (12) attribués à cette deuxième paire est précontrainte au moyen d'un autre dispositif de précontrainte et est ensuite alignée sur l'au moins une cellule d'électrolyse (3) le long de l'axe de cellule (2)
- au moyen d'au moins un élément de retenue (10), l'élément de butée (8) de la première paire est maintenu à une distance prédéterminée (11) de l'élément de butée (8) de la deuxième paire,
- chaque dispositif de précontrainte est détaché de la paire respective composée d'une plaque de pression (9) et d'un élément de butée (8),
- et la force de précontrainte du moyen d'étanchéité (7) est réglée avec précision à l'aide de l'au moins un élément de retenue (10) de manière à obtenir l'étanchéification des éléments en forme de plaque (4) de l'au moins une cellule d'électrolyse (3) par rapport à son environnement.
